(19) **Europäisches Patentamt / European Patent Office / Office européen des brevets**

(11) **EP 2 043 282 A1**

(12) **EUROPEAN PATENT APPLICATION**
published in accordance with Art. 153(4) EPC

(43) Date of publication:
**01.04.2009 Bulletin 2009/14**

(51) Int Cl.:
***H04B 7/26*** (2006.01)

(21) Application number: **07800682.2**

(22) Date of filing: **10.07.2007**

(86) International application number:
**PCT/CN2007/002110**

(87) International publication number:
**WO 2008/011798 (31.01.2008 Gazette 2008/05)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **19.07.2006 CN 200610088840**

(71) Applicants:
• **Datang Mobile Communications Equipment Co., Ltd**
**Haidan**
**Beijing**
**100083 (CN)**
• **Shanghai Datang Mobile Communications Equipment Co., Ltd.**
**Xuhui**
**Shanghai 200233 (CN)**

(72) Inventors:
• **GAO, Bingtao**
**Xuhui**
**Shanghai 200233 (CN)**
• **XIAO, Jie**
**Xuhui**
**Shanghai 200233 (CN)**
• **HONG, Sujuan**
**Xuhui**
**Shanghai 200233 (CN)**

(74) Representative: **von Kirschbaum, Alexander**
**Patent Attorneys von Kreisler Selting Werner,**
**Deichmannhaus am Dom,**
**Bahnhofsvorplatz 1**
**50667 Köln (DE)**

(54) **METHOD AND DEVICE FOR INITIAL SYNCHRONISATION BETWEEN GSM SYSTEM AND TD-SCDMA SYSTEM**

(57)     A method for initial synchronization with TD-SCDMA system in the connection mode of GSM system, to resolve the problem of the downlink synchronization codes (DwPTS) may be undetectable or taking too much time to be detected when a TD-SCDMA/GSM dual-mode terminal is examining TD-SCDMA frames in GSM connection mode with prior art; in the connection mode of the GSM system, the method receives or transmits service data within the service time slots of the GSM frame at the radio frequency band of the GSM system, and receives TD-SCDMA signal within the idle time slots of the GSM frame at the radio frequency band of the TD-SCDMA system, and detects DwPTS in the received TD-SCDMA signal, thus the terminal in the connection mode of the GSM system can quickly detect the DwPTS in TD-SCDMA frames, achieving the initial synchronization of the TD-SCDMA/GSM dual-mode system. A GSM system processing apparatus and a communication apparatus are also disclosed in the invention.

Fig.14

**Description**

**Field of The Invention**

The present invention relates to the field of mobile communication, in particular to a method and apparatus for initial synchronization with a TD-SCDMA (Time Division-Synchronous Code Division Multiple Access) system in the connection mode of GSM (Global System for Mobile Communications) system.

**Background of The Invention**

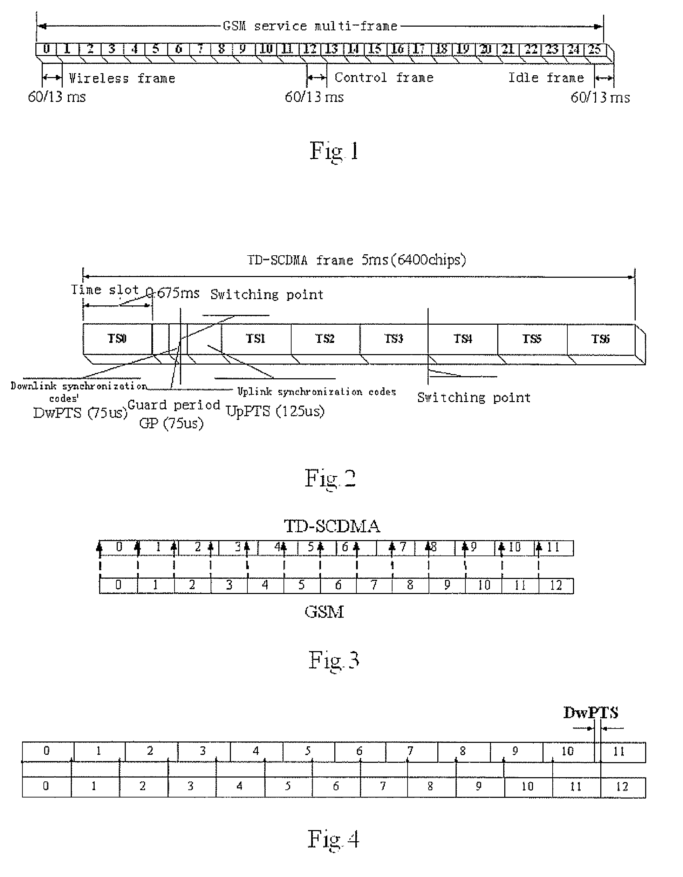

As shown in Figure 1, GSM has a wireless frame length of 60/13ms, with the 13th frame as the control frame and the 26th frame as the idle frame, and goes through the cycle of 26 frames. As shown in Figure 2, a wireless frame of TD-SCDMA is divided into two subframes, each having a length of 5ms. When a terminal is in the connection mode of GSM system, once its GSM idle frame detects the downlink synchronization codes (DwPTS) within the TD-SCDMA frame shown in Figure 2, the synchronization with the TD-SCDMA system may be achieved with corresponding synchronization process.

The relationship between the wireless frame of GSM and the wireless subframe of TD-SCDMA is shown in Figure 3 In particular, the relationship is as follows:

$$\frac{T_{GSM}}{T_{TDS}} = \frac{60/13}{5} = \frac{12}{13}$$

Where $T_{GSM}$ is the wireless frame length of GSM, and $T_{TDS}$ is the length of the corresponding wireless subframe of TD-SCDMA.

In a TD-SCDMA/GSM dual-mode system, when the terminal is in the connection mode of GSM, the cycle of occurrence of the GSM idle frame is 26 frames. And because the 24-subframe cycle (120ms) of TD-SCDMA and the 26-frame cycle (120ms) of GSM have exactly the same length, it is possible that the DwPTS will never be detected if only the GSM idle frame was used for receiving the data in TD-SCDMA frames.

Specifically, as shown in the schematic view of a TD-SCDMA frame and a GSM frame in Figure 4, the upper frame is the TD-SCDMA frame and the lower is the GSM frame. The GSM frame is taken at the frame header, and the TD-SCDMA frame is taken simultaneously with the GSM frame header, possibly at any location of the TD-SCDMA frame. Because the length of the TD-SCDMA frame is larger than that of the GSM frame and the 26 frames of GSM is aligned with the 24 frames of TD-SCDMA, when DwPTS is successively transmitted, the DwPTS will not be detected using the GSM idle frame if the DwPTS is at the location shown in Figure 4.

When DwPTS is not transmitted successively, even if the DwPTS is not at the location shown in Figure 4, it would be possible that the DwPTS is never detected, since there is an idle frame per 26 GSM frames and the 26 frames of GSM is in complete alignment with the 24 subframes of TD-SCDMA. Hence, the (N*26-1)th frame(i.e. the idle frame) of GSM also corresponds to the (N*24-1)th subframe in the local frame number of TD-SCDMA. If the (N*24-1)th frame in the local frame number of TD-SCDMA is an even-numbered frame corresponding to the GSM idle frame, whereas the DwPTS is transmitted at an odd-numbered frame, or if the (N*24-1)th frame in the local frame number of TD-SCDMA is an odd-numbered frame corresponding to the GSM idle frame, whereas the DwPTS is transmitted at an even-numbered frame, the DwPTS of the TD-SCDMA frame will never be detected by using only the idle frames in the connection mode of GSM.

Since the DwPTS can only be detected once per 26 GSM frames, a lot of time is spent in detecting it and thus preventing the implementation of other necessary steps such as synchronous adjustment, automatic gain control (AGC) and repeated examination, etc., which in turn results in the quality of signals being hard to control and unreliable. Furthermore, the current method can not support features such as the blanking rule, which might be added in the future.

**Summary of The Invention**

The present invention provides a method and apparatus for initial synchronization with a TD-SCDMA system in the connection mode of GSM system, in order to resolve the problem of DwPTS being not detectable or taking too much time to be detected when a TD-SCDMA/GSM dual-mode terminal is examining TD-SCDMA frames in GSM connection mode with prior art; furthermore, to resolve the problems of low reliability in the detection of DwPTS and lack of support for certain newly-added features.

The present invention provides the following technical schemes:

A method for detecting the DwPTS of a TD-SCDMA frame in the connection mode of GSM system, comprising the steps of:

A communication apparatus in the connection mode of GSM system receives or transmits service data within the service time slots of a GSM frame at the radio frequency band of the GSM system, and receives TD-SCDMA data within the idle time slots of the GSM frame at the radio frequency band of TD-SCDMA; and

The communication apparatus detects DwPTS in the received TD-SCDMA data.

According to the method above:

The GSM frame has at least two idle time slots for receiving TD-SCDMA data.
The at least two idle time slots are successive idle time slots in the GSM frame.
At the corresponding starting point-in-time of the idle time slots, switch from the radio frequency band of the GSM system to the radio frequency band of the TD-SCDMA system; at the corresponding terminating point-in-time of the idle time slots, switch from the radio frequency band of the TD-SCDMA system to the radio frequency band of the GSM system.
The communication apparatus in the connection mode of GSM system calls the processing functions of TD-SCDMA to detect the DwPTS in the TD-SCDMA signal.
A method for the initial synchronization of a TD-SCDMA/GSM dual-mode system, comprising the steps of:

A communication apparatus in the connection mode of GSM system receives or transmits service data within the service time slots of a GSM frame at the radio frequency band of the GSM system, and receives TD-SCDMA data within the idle time slots of the GSM frame at the radio frequency band of TD-SCDMA; and

The communication apparatus detects DwPTS in the received TD-SCDMA data; and

The communication apparatus performs the synchronization process with the TD-SCDMA system according to the detected DwPTS.

According to the method above:
The GSM frame has at least two idle time slots for receiving TD-SCDMA data.
The at least two idle time slots are successive idle time slots in the GSM frame.
At the corresponding starting point-in-time of the idle time slots, switch from the radio frequency band of the GSM system to the radio frequency band of the TD-SCDMA system; at the corresponding terminating point-in-time of the idle time slots, switch from the radio frequency band of the TD-SCDMA system to the radio frequency band of the GSM system.
The communication apparatus in the connection mode of GSM system calls the processing functions of TD-SCDMA to detect the DwPTS in the TD-SCDMA signal.
A processing apparatus for the GSM system, comprising:

A communication interface for receiving and transmitting information;

A GSM system radio frequency unit for receiving or transmitting service data via the communication interface within the service time slots of the GSM frame at the radio frequency band of the GSM system;

A TD-SCDMA system radio frequency unit for receiving TD-SCDMA data via the communication interface within the idle time slots of the GSM frame at the radio frequency band of the TD-SCDMA system;

A control unit for controlling the switching between the GSM system radio frequency unit and the TD-SCDMA system radio frequency unit, as well as detecting the DwPTS in the received TD-SCDMA data.

The TD-SCDMA system radio frequency unit receives TD-SCDMA data in at least two idle time slots of the GSM frame.
The idle time slots are successive idle time slots in the GSM frame.
Via the control unit, the processing apparatus for the GSM system switches from the radio frequency unit of the GSM system to the radio frequency unit of the TD-SCDMA system at the point-in-time corresponding to the start of the idle time slots; and switches from the radio frequency unit of the TD-SCDMA system to the radio frequency unit of the GSM system at the point-in-time corresponding to the termination of the idle time slots.

After receiving the TD-SCDMA data, the control unit calls the processing functions of TD-SCDMA to detect the DwPTS in the TD-SCDMA signal.

A communication apparatus, comprising:

A communication unit for receiving and transmitting information;

A GSM system processing unit for receiving and transmitting service data via the communication unit within the service time slots of the GSM frame at the radio frequency band of the GSM system, and receiving TD-SCDMA data via the communication unit within the idle time slots of the GSM frame at the radio frequency band of the TD-SCDMA system and detecting the DwPTS in said TD-SCDMA data;

A TD-SCDMA system processing unit for receiving and transmitting information via the communication unit in the connection mode of the GSM system;

A synchronization unit for performing the synchronization process of the GSM system processing unit and the TD-SCDMA system processing unit according to the detected DwPTS while in the connection mode of the GSM system;

A system switching unit for performing the switching between the GSM system processing unit and the TD-SCDMA system processing unit.

The GSM system processing unit comprising:

A communication interface for receiving and transmitting information;

A GSM system radio frequency unit for receiving or transmitting service data via the communication interface within the service time slots of the GSM frame at the radio frequency band of the GSM system;

A TD-SCDMA system radio frequency unit for receiving TD-SCDMA data via the communication interface within the idle time slots of the GSM frame at the radio frequency band of the TD-SCDMA system;

A control unit for controlling the switching between the GSM system radio frequency unit and the TD-SCDMA system radio frequency unit, and for detecting the DwPTS in the received TD-SCDMA data.

The GSM system processing unit receives TD-SCDMA data in at least two idle time slots in the GSM frame.

The idle time slots are successive idle time slots in the GSM frame.

The GSM system processing apparatus switches from the radio frequency unit of the GSM system to the radio frequency unit of the TD-SCDMA system at the point-in-time corresponding to the start of the idle time slots, and switches from the radio frequency unit of the TD-SCDMA system to the radio frequency unit of the GSM system at the point-in-time corresponding to the termination of the idle time slots.

The GSM system processing unit calls the processing functions of the TD-SCDMA to detect the DwPTS in the TD-SCDMA signal.

The present invention has the following advantages:

The present invention fully utilizes the idle time slots within each frame in the connection mode of GSM system to detect the DwPTS in the TD-SCDMA frame. In accordance with the configuration of the idle time slots, the DwPTS may be detected in the 13-frame cycle of the GSM with a shorter period of time, thus the problem of the DwPTS being undetectable using only the GSM idle frame in the connection mode of GSM system is resolved.

The synchronization of the GSM/ TD-SCDMA dual-mode system achieved through the fast detection of DwPTS provides the necessary preparation for the measuring of TD-SCDMA and the switching between the GSM and the TD-SCDMA systems, while facilitating the implementation of necessary steps such as synchronous adjustment, automatic gain control (AGC) and repeated examination, etc., in the synchronization process, thus improving the reliability of the system

The present invention supports discontinuous transmission of DwPTS by TD-SCDMA base stations, as well as features that might be added in the future, such as the blanking rule.

**Brief Description of The Drawings**

Figure 1 is a schematic view of the structure of the service multi-frame of GSM systems in the prior art;

Figure 2 is a schematic view of the frame structure ofTD-SCDMA systems in the prior art;

Figure 3 is a schematic view of the timing relationship of GSM/ TD-SCDMA frames in the prior art;

Figure 4 is a schematic view of the TD-SCDMA frame and the GSM frame when the DwPTS is transmitted successively in the prior art;

Figure 5 is a schematic view of the time slot configuration of the GSM frame in the connection mode of GSM in an embodiment of the present invention;

Figure 6 is a schematic view of the change of timing of TD-SCDMA wireless frame observed in the GSM idle window in an embodiment of the present invention;

Figure 7 is a schematic view of the timing relationship of the TD-SCDMA wireless frame with respect to the GSM frame in an embodiment of the present invention;

Figure 8 is a schematic view of the possible locations of DwPTS with respect to the GSM frame header in an embodiment of the present invention;

Figure 9 is a schematic view of the transmission advance time and frequency stabilizing time of the GSM uplink service time slot in an embodiment of the present invention;

Figure 10 is a schematic view of the detection of successive transmission of DwPTS using the GSM idle window in an embodiment of the present invention;

Figure 11 is a schematic view of the detection of discontinuous transmission of DwPTS using the GSM idle window in an embodiment of the present invention;

Figure 12 is a schematic view of the structure of the communication apparatus in an embodiment of the present invention;

Figure 13 is a schematic view of the structure of the GSM system processing unit in an embodiment of the present invention;

Figure 14 is a processing flowchart for each GSM frame when using the last four successive time slots in the GSM frame as idle time slots to detect DwPTS in an embodiment of the present invention.

**Detailed Description of The Invention**

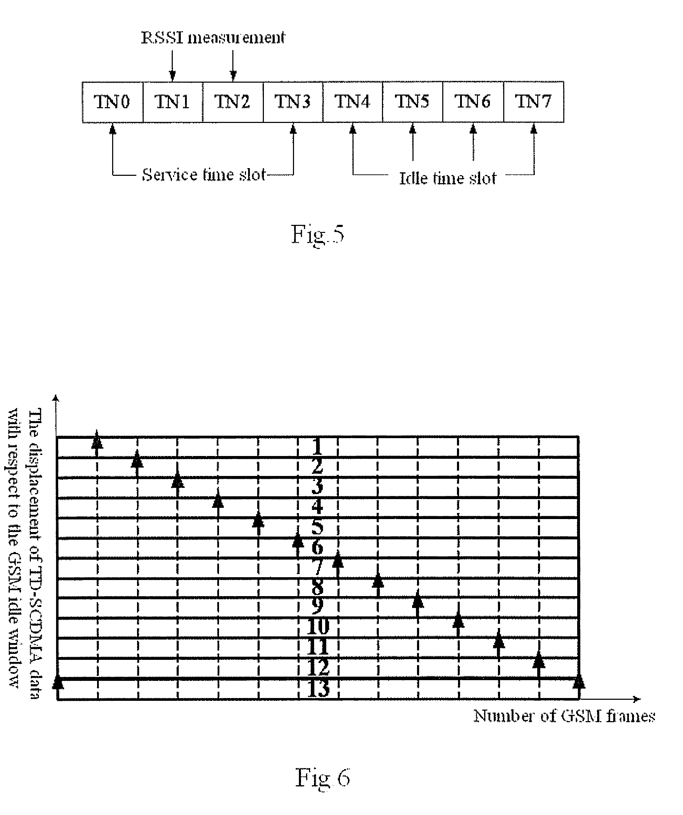

To resolve the problem of DwPTS being undetectable and the detection process being too time-consuming, which may occur during the detection of TD-SCDMA frames by a TD-SCDMA/GSM dual-mode terminal in the connection mode of GSM, the present invention uses the idle time slots in a GSM frame to detect the DwPTS of a TD-SCDMA frame.
While the 13th frame of the service multi-frames of GSM is the control frame and the 26th frame is the idle frame, both of which are part of a 26-frame cycle. The usage of the idle time slots in GSM frames to detect the DwPTS is not related to the idle frame. For the sake of convenience, the GSM multi-frames are seen as going through a cycle of 13 frames in this embodiment.
Each GSM frame is divided into 8 time slots. Because two service time slots must be configured with an interval of two time slots between them in the connection mode of GSM, as seen in Figure 5, the service time slots in the connection mode of GSM are configured as TN0 and TN3 in this embodiment, while TN 1 and TN 2 are used for the measurement of received signal strength indication (RSSI). Therefore, part or all of the four successive idle time slots of TN4 to TN7 may be used to receive TD-SCDMA frame data and detect DwPTS of TD-SCDMA frames; the combination of part or all of the four idle time slots is the idle window of the GSM, while the length of the idle window is determined by the number of the idle time slots used.

With reference to Figure 6, since the length of the GSM frame is different from that of the TD-SCDMA frame, the TD-SCDMA frame data observed within the idle window of each of the GSM frames are delayed by a fixed time T. If a GSM system is taken as the reference for timing, the timing of the TD-SCDMA wireless frame observed in two adjacent GSM frames will be fixedly delayed by a time $T=T_{GSM}/12(5/13ms)$, that is, the backward shift of the TD-SCDMA frame data in relation to the GSM idle window within the 13-frame cycle of GSM as shown in Figure 6. Hence, the recurring cycle of the timing relationship between the two systems is $T_{GSM}*13$ or $T_{TDS}*12$.

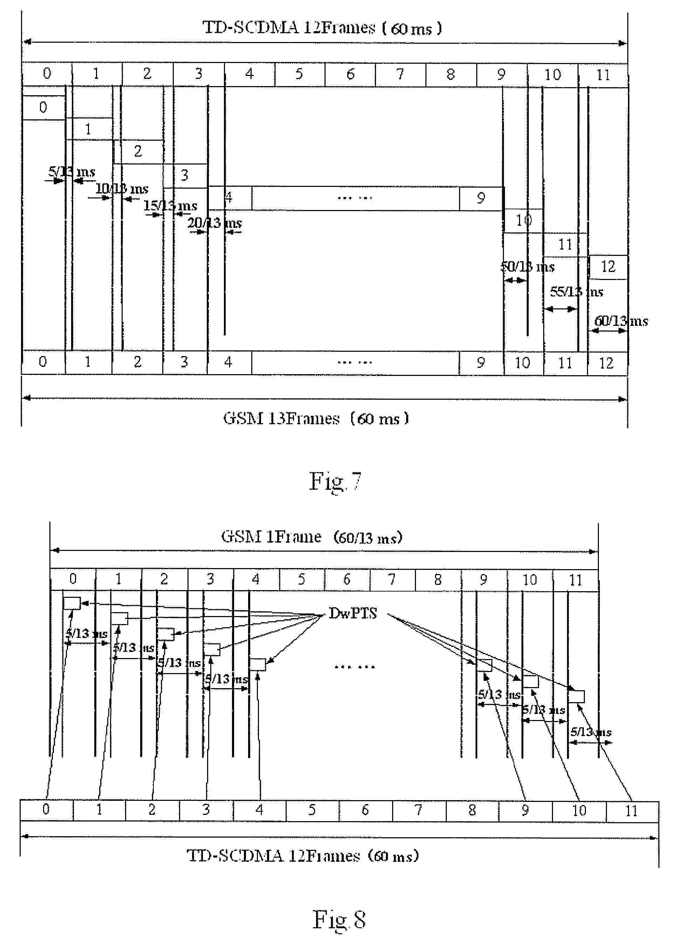

Typically, it is assumed in this embodiment that the initial timing difference between the two systems is 0, thus the time and position relationship of the TD-SCDMA frame corresponding to the 13 successive wireless frames within a GSM multi-frame is shown in Figure7.

According to the timing relationship of TD-SCDMA with respect to GSM, in order to ensure that in the process of the GSM idle window sliding against the TD-SCDMA frame and performing detection, the whole DwPTS is bound to be detected for one or more times in every 13-frame cycle of the GSM by the GSM idle window, a GSM frame is divided into 12 sections in this embodiment, with each section having the length of 5/13ms (the GSM sliding window slides 5/13ms each time), i.e. the relative length of each sliding of the idle window. Therefore, in the process of GSM idle window sliding against the TD-SCDMA frame and performing detection, it is ensured that the sliding window is bound to contain DwPTS. The DwPTS may appear at any one of the 12 locations within the GSM frame shown in Figure 8.

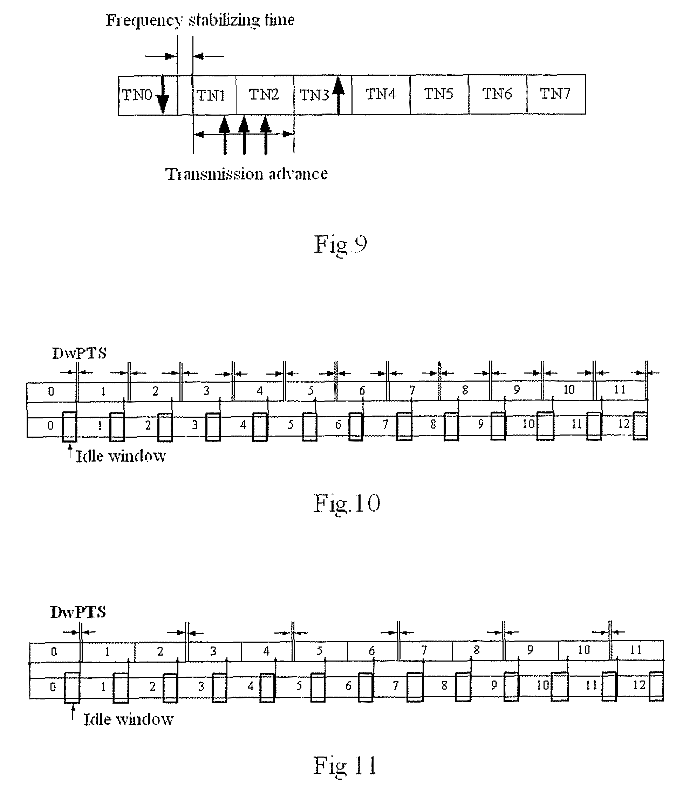

With reference to Figure 9, because TD-SCDMA data are received in the mode of GSM system, the radio frequency must have time to stabilize as the frequency is switched between GSM/TD-SCDMA on the hardware level; the transmission advance within the uplink service time slot is used to counteract the path delay, the longer delay the greater transmission advance; combined with the frequency stabilizing time, the uplink transmission advance may appear at any locations shown in Figure 9.

Assume the number of adjacent idle time slots contained in the GSM idle window is n, the timing delay of the TD-SCDMA wireless subframe observed between two adjacent GSM frames is T; the sum of the frequency stabilizing time needed for receiving TD-SCDMA data in the mode of GSM system is about 0.4ms (0.2ms×2); the length of DwPTS is (64ms/1.28e6); thus the length of the idle window is greater than or equal to the sum of the three times pieces above, i.e.

$$n \times \frac{15ms}{26} \geq \frac{5ms}{13} + 0.4ms + \frac{64ms}{1.28e6} \qquad (1)$$

Hence, it is ensued that the whole DwPTS is contained in certain idle windows; since 64ms/1.28e6 is a minimal value compared to values such as 5ms/13 and 0.4ms, it can be neglected in calculation, thus we have:

$$n \geq 1.36 \qquad (2)$$

Since n is an integral value, at least two and at most four idle time slots of GSM are used for the detection of DwPTS of TD-SCDMA.

As shown in Figure 10, for each of the idle windows that consists of different lengths of time slots, when the DwPTS is transmitted successively and located at the position as shown, i.e. the rear edge of the GSM idle window is aligned with the front edge of the DwPTS of TD-SCDMA, the time needed for the detection of DwPTS is the longest; using the latter time slots in the GSM idle time slots (TN4 to TN7) will also increase the time need for the detection of DwPTS.

In the process of detecting DwPTS, according to the worst-case scenario described above, the time needed for the detection of the whole DwPTS using two GSM idle time slots (TN6 and TN7) is:

$$\left[ \left( \frac{6}{8} \times \frac{60}{13} + \frac{5}{13} + 0.4 \right) \Big/ \left( 5 - \frac{60}{13} \right) \right] + 1 = 12.04 \qquad (3)$$

That is, the time of at most 13 frames is needed in the detection of the whole DwPTS. In this case the GSM idle frame may possibly be used.

Likewise, in the worst-case scenario described above, the time needed for the detection of the whole DwPTS using four GSM idle time slots (TN4 to TN7) is:

$$\left[\left(\frac{4}{8} \times \frac{60}{13} + \frac{5}{13} + 0.4\right) \middle/ \left(5 - \frac{60}{13}\right)\right] + 1 = 9.04 \qquad (4)$$

That is, the time of at most 10 frames is needed in the detection of the whole DwPTS.

As required in Formula (1), an idle window consisting of different idle time slots may have multiple frames in the 13-frame cycle that can detect the DwPTS; assume the number of the idle time slots being used is n, within one 13-frame cycle of the GSM, the number of GSM frames within the GSM idle window that can observe the whole DwPTS is:

$$\left\lfloor \left(\frac{n}{8} \times \frac{60}{13} - 0.4\right) \middle/ \left(5 - \frac{60}{13}\right)\right\rfloor = \left\lfloor \frac{3}{2}n - 1.04 \right\rfloor \qquad (5)$$

where $\lfloor \ \rfloor$ denotes rounding down to an integral value. It can be seen in Formula (5), that the frequency stabilizing time greatly effects the number of detectable frames; according to Formula (5), in the 13-frame cycle of the GSM idle window, the corresponding relationship between the number of idle time slots in the idle window and the number of the frames capable of detecting DwPTS successively is shown in the table below:

| Number of idle time slots | Number of the frames capable of successive detection |
|---|---|
| 2 | 1 |
| 3 | 3 |
| 4 | 4 |

With reference to Figure 11, if the GSM idle window detects that the DwPTS is not transmitted successively, after the DwPTS is detected for the first time by the GSM idle window, the DwPTS will be detected by the GSM idle window at an interval of one frame, which is different to the case where the GSM idle window detects the DwPTS successively as the DwPTS is transmitted successively; because the DwPTS is detected at the interval of one frame, the detection time is increased compared to the case where the DwPTS is transmitted successively, and the number of the frames detecting the DwPTS at the interval of one frame is less than that of the case where the DwPTS is transmitted successively. Exactly how many times the DwPTS will be successively detected at the interval of one frame are related to the length of the idle window, the longer the window length is, the larger the number of times.

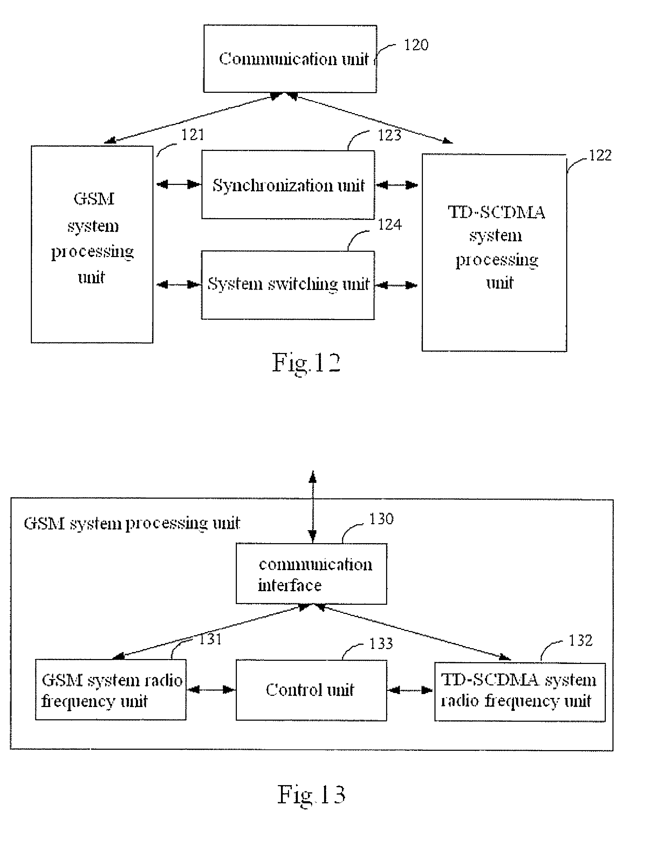

According to the rule described above, the idle time slots within the GSM frames are used in this embodiment to detect the DwPTS. With reference to Figure 12, the communication apparatus in this embodiment mainly comprises a communication unit 120, a GSM system processing unit 121, a TD-SCDMA system processing unit 122, a synchronization unit 123 and a system switching unit 124; wherein, the communication unit 120 is used for receiving and transmitting information; the GSM system processing unit 121 is used in the connection mode of the GSM system for receiving or transmitting service data within the service time slot of the GSM frame at the radio frequency band of the GSM system, and receiving TD-SCDMA data within the idle time slot of the GSM frame at the radio frequency band of the TD-SCDMA system, as well as detecting the DwPTS in the received TD-SCDMA data; the TD-SCDMA system processing unit 122 is used for receiving and transmitting information through the communication unit 120 in the connection mode of the GSM system; the synchronization unit 123 is used for performing the synchronization process between the GSM system processing unit 121 and the TD-SCDMA system processing unit 122 according to the detected DwPTS in the connection mode of the GSM system; the system switching unit 124 is used for performing the system switching between the GSM system processing unit 121 and the TD-SCDMA system processing unit 122.

When the communication apparatus is in the connection mode of the GSM system, the non-idle time slot in the GSM frame is used by the GSM system processing unit 121 to receive and transmit information through the communication unit 120. When the point-in-time corresponding to the start of the idle time slot within the GSM frame is reached, the GSM system processing unit 121 switches from the radio frequency band of the GSM system to the radio frequency band of the TD-SCDMA system to receive TD-SCDMA data; when the point-in-time corresponding to the termination of the idle time slot is reached, the GSM system processing unit 121 switches from the radio frequency band of the TD-SCDMA system to the radio frequency band of the GSM system to receive and transmit information. After receiving the TD-SCDMA data, the GSM system processing unit 121 calls the processing functions of TD-SCDMA to detect the DwPTS in the TD-SCDMA data. After the DwPTS is detected by the GSM system processing unit 121, said DwPTS is further used by the synchronization unit 123 to perform the subsequent synchronization process.

The present invention only performs the switching of radio frequencies and the detection of DwPTS in the TD-SCDMA data within the GSM system processing unit 121. The present invention is not concerned with the system switching between the GSM system processing unit and the TD-SCDMA system processing unit.

The GSM system processing unit of this embodiment is shown in Figure 13, which comprises a communication interface 130, a GSM system radio frequency unit 131, a TD-SCDMA system radio frequency unit 132 and a control unit 133; wherein, the communication interface 130 is used for connecting to the communication unit 120 and providing the communication unit 120 with the service of receiving and transmitting data; the GSM system radio frequency unit 131 is used for the GSM system processing unit to receive or transmit service data within the service time slots of GSM frames at the radio frequency band of the GSM system; the TD-SCDMA system radio frequency unit 132 is used for the GSM system processing unit to receive TD-SCDMA data within the idle time slots of GSM frames at the radio frequency band of the TD-SCDMA system; the control unit 133 is used for controlling the switching between the GSM system radio frequency unit 131 and the TD-SCDMA system radio frequency unit 132, and for detecting DwPTS in the received TD-SCDMA data.

The GSM system radio frequency unit 131 of the GSM system processing unit receives and transmits information through the communication interface 130 in the non-idle time slots of the GSM frame. When the point-in-time corresponding to the start of the idle time slot within the GSM frame is reached, the control unit 133 performs the radio frequency switching from the GSM system radio frequency unit 131 to the TD-SCDMA system radio frequency unit 132, and the TD-SCDMA data are received by the TD-SCDMA system radio frequency unit 132 at the TD-SCDMA radio frequency band; when the point-in-time corresponding to the termination of the idle time slot is reached, the control unit 133 performs the radio frequency switching from the TD-SCDMA system radio frequency unit 132 to the GSM system radio frequency unit 131, and information is received and transmitted by the GSM system radio frequency unit 131 at the GSM radio frequency band. After receiving the TD-SCDMA data, the control unit 133 calls the processing functions of TD-SCDMA to detect the DwPTS in the TD-SCDMA data.

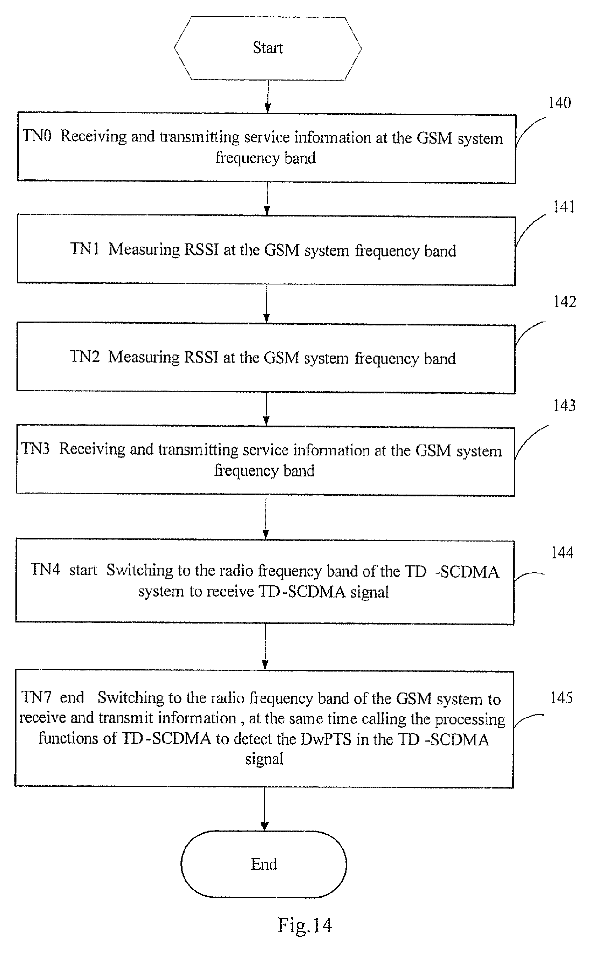

With reference to Figure 14, taking as an example the last four successive time slots of the GSM frame which is used as idle time slots for detecting the DwPTS, the processing flow of detecting DwPTS in the GSM frame is as follows:

Step 140: when the time slot TN0 is reached, the GSM system processing unit transmits service data at the GSM system frequency band.

Step 141: when the time slot TN1 is reached, the GSM system processing unit measures RSSI at the GSM system frequency band.

Step 142: when the time slot TN2 is reached, the GSM system processing unit measures RSSI at the GSM system frequency band.

Step 143: when the time slot TN3 is reached, the GSM system processing unit transmits service data at the GSM system frequency band.

Step 144: at the initial moment when the time slot TN4 is reached, the GSM system processing unit switches to the radio frequency band of the TD-SCDMA system and receives TD-SCDMA data within the four time slots of TN4 to TN 7.

Step 145: when the terminating point-in-time of the time slot TN7 is reached, the GSM system processing unit switches to the radio frequency band of the GSM system to continue transmitting data. After receiving the TD-SCDMA data, the GSM system processing unit calls the processing functions of TD-SCDMA to detect DwPTS in the TD-SCDMA data.

After the TD-SCDMA data containing the whole DwPTS are received by the GSM system processing unit, the synchronization location and the codeword information of the TD-SCDMA system can be obtained precisely using the existing methods of computing power ratio sliding window and calculating relevant power, thus achieving the initial synchronization between the GSM system and the TD-SCDMA system, as well as providing necessary preparations for the subsequent measuring of the TD-SCDMA system and switching between the GSM system and the TD-SCDMA system, while other operations such as synchronous adjustment, automatic gain control and repeated examination, etc., may also be performed.

The GSM frame may also be configured with 2 or 3 successive idle time slots, or having randomly located idle time slots within one frame. In these cases the processing flow is similar to the flow described above.

It can be understood from the embodiment above that the present invention fully utilizes the idle time slots in the connection mode of GSM system to detect the DwPTS in the 13-frame cycle of GSM with a shorter period of time, based on the configuration of the idle time slots. Thus resolving the problem of DwPTS being undetectable with only the GSM idle frame in the connection mode of GSM system, providing necessary preparations for the measuring of TD-SCDMA and the switching between the GSM and the TD-SCDMA systems, while facilitating the implementation of necessary steps such as synchronous adjustment, automatic gain control (AGC) and repeated examination, etc. in the entire process, as well as improving the reliability of the system. The present invention supports features that might be added in the future, such as the blanking rule.

It is obvious to those skilled in the art that various modifications and variations may be made to the present invention without departing from the spirits and scope of the invention. Thus, it is intended that all such modifications and variations are covered in the present invention if they fall within the scope of the claims and the equivalents.

## Claims

1. A method for detecting the DwPTS of TD-SCDMA frames in the connection mode of the GSM system, comprising the steps of:

   A communication apparatus in the connection mode of Global System for Mobile Communication (GSM system) receives or transmits service data within the service time slots of the GSM frame at the radio frequency band of the GSM system, and receives Time-division Synchronous Code Division Multiple Access (TD-SCDMA) data within the idle time slots of the GSM frame at the radio frequency band of the TD-SCDMA; and
   The communication apparatus detects the downlink synchronization codes (DwPTS) in the received TD-SCDMA data.

2. The method of claim 1, **characterized in that** the GSM frame has at least two idle time slots for receiving TD-SCDMA data.

3. The method of claim 2, **characterized in that** the at least two idle time slots are successive time slots in the GSM frame

4. The method of claim 3, **characterized in that** at the point-in-time corresponding to the start of the idle time slot switch from the radio frequency band of the GSM system to the radio frequency band of the TD-SCDMA system, and at the point-in-time corresponding to the termination of the idle time slot switch from the radio frequency band of the TD-SCDMA system to the radio frequency band of the GSM system.

5. The method of claim 1, **characterized in that** the communication apparatus in the connection mode of GSM system calls the processing functions of TD-SCDMA to detect the DwPTS in the TD-SCDMA signal.

6. A method of the initial synchronization of a TD-SCDMA/GSM dual-mode system comprising the steps of:

   A communication apparatus in the connection mode of GSM system receives or transmits service data within the service time slot of the GSM frame at the radio frequency band of the GSM system, and receives TD-SCDMA data within the idle time slot of the GSM frame at the radio frequency band of the TD-SCDMA;
   The communication apparatus detects DwPTS in the received TD-SCDMA data; and
   The communication apparatus performs the synchronization process with the TD-SCDMA system according to the detected DwPTS.

7. The method of claim 6, **characterized in that** the GSM frame has at least two idle time slots for receiving TD-SCDMA data.

8. The method of claim 7, **characterized in that** the at least two idle time slots are successive time slots in the GSM frame.

9. The method of claim 8, **characterized in that** at the point-in-time corresponding to the start of the idle time slot switch from the radio frequency band of the GSM system to the radio frequency band of the TD-SCDMA system, and at the point-in-time corresponding to the termination of the idle time slot switch from the radio frequency band of the TD-SCDMA system to the radio frequency band of the GSM system.

10. The method of claim 6, **characterized in that** the communication apparatus in the connection mode of GSM system calls the processing functions of TD-SCDMA to detect the DwPTS in the TD-SCDMA signal.

11. A GSM system processing apparatus, **characterized in that** the GSM system processing apparatus comprising:

    A communication interface for receiving and transmitting information;
    A GSM system radio frequency unit for receiving or transmitting service data via the communication interface within the service time slot of the GSM frame at the radio frequency band of the GSM system;
    A TD-SCDMA system radio frequency unit for receiving TD-SCDMA data via the communication interface within the idle time slot of the GSM frame at the radio frequency band of the TD-SCDMA system;
    A control unit for controlling the switching between the GSM system radio frequency unit and the TD-SCDMA system radio frequency unit, and for detecting DwPTS in the received TD-SCDMA data.

12. The apparatus of claim 11, **characterized in that** the TD-SCDMA system radio frequency unit receives TD-SCDMA data in at least two idle time slots in the GSM frame.

13. The apparatus of claim 12, **characterized in that** the idle time slots are successive time slots in the GSM frame.

14. The apparatus of claim 13, **characterized in that** via the control unit, the GSM system processing apparatus switches from the radio frequency unit of the GSM system to the radio frequency unit of the TD-SCDMA system at the point-in-time corresponding to start of the idle time slot, and switches from the radio frequency unit of the TD-SCDMA system to the radio frequency unit of the GSM system at the point-in-time corresponding to the termination of the idle time slot.

15. The apparatus of any one of claim 11 to 14, **characterized in that** after receiving the TD-SCDMA data, the control unit calls the processing functions of TD-SCDMA to detect the DwPTS in the TD-SCDMA signal.

16. A communication apparatus, **characterized in that** the communication apparatus comprising:

    A communication unit for receiving and transmitting information;
    A GSM system processing unit for receiving and transmitting service data via the communication unit within the service time slot of the GSM frame at the radio frequency band of the GSM system, and receiving TD-SCDMA data via the communication unit within the idle time slot of the GSM frame at the radio frequency band of the TD-SCDMA system and detecting the DwPTS in the TD-SCDMA data;
    A TD-SCDMA system processing unit for receiving and transmitting information via the communication unit in the connection mode of the GSM system;
    A synchronization unit for performing the synchronization process between the GSM system processing unit and the TD-SCDMA system processing unit according to the detected DwPTS in the connection mode of GSM system;
    A system switching unit for performing the switching between the GSM system processing unit and the TD-SCDMA system processing unit.

17. The apparatus of claim 16, **characterized in that** the GSM system processing unit comprising:

    A communication interface for receiving and transmitting information;
    A GSM system radio frequency unit for receiving or transmitting service data via the communication interface within the service time slot of the GSM frame at the radio frequency band of the GSM system;
    A TD-SCDMA system radio frequency unit for receiving TD-SCDMA data via the communication interface within the idle time slot of the GSM frame at the radio frequency band of the TD-SCDMA system;
    A control unit for controlling the frequency switching between the GSM system radio frequency unit and the TD-SCDMA system radio frequency unit, and for detecting the DwPTS in the received TD-SCDMA data.

18. The apparatus of claim 16, **characterized in that** the GSM system processing unit receives TD-SCDMA data in at least two idle time slots in the GSM frame.

19. The apparatus of claim 18, **characterized in that** the idle time slots are successive idle time slots in the GSM frame.

20. The apparatus of claim 19, **characterized in that** the GSM system processing apparatus switches from the radio frequency unit of the GSM system to the radio frequency unit of the TD-SCDMA system at the point-in-time corresponding to the start of the idle time slot, and switches from the radio frequency unit of the TD-SCDMA system to the radio frequency unit of the GSM system at the point-in-time corresponding to the termination of the idle time slot.

21. The apparatus of any one of claim 16 to 20, **characterized in that** the GSM system processing unit calls the processing functions of TD-SCDMA to detect the DwPTS in the TD-SCDMA signal.

GSM service multi-frame

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 |

Wireless frame

Control frame

Idle frame

60/13 ms

60/13 ms

60/13 ms

Fig.1

TD-SCDMA frame 5ms (6400chips)

Time slot 0.675ms  Switching point

| TS0 | TS1 | TS2 | TS3 | TS4 | TS5 | TS6 |

Downlink synchronization codes'

Uplink synchronization codes

Switching point

DwPTS (75us)  Guard period GP (75us)  UpPTS (125us)

Fig.2

TD-SCDMA

| 0 | 1 | 2 | 3 | 4 | 5 | 6 | 7 | 8 | 9 | 10 | 11 |

| 0 | 1 | 2 | 3 | 4 | 5 | 6 | 7 | 8 | 9 | 10 | 11 | 12 |

GSM

Fig.3

DwPTS

| 0 | 1 | 2 | 3 | 4 | 5 | 6 | 7 | 8 | 9 | 10 | 11 |

| 0 | 1 | 2 | 3 | 4 | 5 | 6 | 7 | 8 | 9 | 10 | 11 | 12 |

Fig.4

12

RSSI measurement

| TN0 | TN1 | TN2 | TN3 | TN4 | TN5 | TN6 | TN7 |

└── Service time slot──┘     └── Idle time slot ──┘

Fig. 5

The displacement of TD-SCDMA data
with respect to the GSM idle window

1
2
3
4
5
6
7
8
9
10
11
12
13

Number of GSM frames

Fig 6

Fig.7

Fig.8

Frequency stabilizing time

| TN0 | TN1 | TN2 | TN3 | TN4 | TN5 | TN6 | TN7 |

Transmission advance

Fig.9

DwPTS

| 0 | 1 | 2 | 3 | 4 | 5 | 6 | 7 | 8 | 9 | 10 | 11 |

| 0 | 1 | 2 | 3 | 4 | 5 | 6 | 7 | 8 | 9 | 10 | 11 | 12 |

Idle window

Fig.10

DwPTS

| 0 | 1 | 2 | 3 | 4 | 5 | 6 | 7 | 8 | 9 | 10 | 11 |

| 0 | 1 | 2 | 3 | 4 | 5 | 6 | 7 | 8 | 9 | 10 | 11 | 12 |

Idle window

Fig.11

Communication unit 120

121       123

GSM system processing unit

Synchronization unit

124

System switching unit

TD-SCDMA system processing unit 122

Fig.12

GSM system processing unit

communication interface 130

131     133     132

GSM system radio frequency unit

Control unit

TD-SCDMA system radio frequency unit

Fig.13

```
                        ┌─────────────┐
                        │    Start    │
                        └──────┬──────┘
                               │
                               ▼
┌──────────────────────────────────────────────────────┐   140
│ TN0  Receiving and transmitting service information    │
│        at the GSM system frequency band                │
└───────────────────────┬────────────────────────────────┘
                        │
                        ▼
┌──────────────────────────────────────────────────────┐   141
│  TN1  Measuring RSSI at the GSM system frequency band  │
└───────────────────────┬────────────────────────────────┘
                        │
                        ▼
┌──────────────────────────────────────────────────────┐   142
│  TN2  Measuring RSSI at the GSM system frequency band  │
└───────────────────────┬────────────────────────────────┘
                        │
                        ▼
┌──────────────────────────────────────────────────────┐   143
│ TN3  Receiving and transmitting service information    │
│        at the GSM system frequency band                │
└───────────────────────┬────────────────────────────────┘
                        │
                        ▼
┌──────────────────────────────────────────────────────┐   144
│ TN4  start  Switching to the radio frequency band of   │
│   the TD -SCDMA system to receive TD-SCDMA signal      │
└───────────────────────┬────────────────────────────────┘
                        │
                        ▼
┌──────────────────────────────────────────────────────┐   145
│ TN7  end   Switching to the radio frequency band of    │
│ the GSM system to receive and transmit information ,    │
│ at the same time calling the processing functions of   │
│ TD -SCDMA to detect the DwPTS in the TD -SCDMA signal  │
└───────────────────────┬────────────────────────────────┘
                        │
                        ▼
                 ┌─────────────┐
                 │     End     │
                 └─────────────┘
```

Fig.14

<table>
<tr><td colspan="2"><strong>INTERNATIONAL SEARCH REPORT</strong></td><td>International application No.<br>PCT/CN2007/002110</td></tr>
</table>

**A. CLASSIFICATION OF SUBJECT MATTER**

H04B7/26 (2006.01) i

According to International Patent Classification (IPC) or to both national classification and IPC

**B. FIELDS SEARCHED**

Minimum documentation searched (classification system followed by classification symbols)

IPC: H04B H04Q H04L H04M H04J

Documentation searched other than minimum documentation to the extent that such documents are included in the fields searched

Electronic data base consulted during the international search (name of data base and, where practicable, search terms used)

WPI,EPODOC,PAJ,CNPAT(SCDMA, GSM, CDMA, sync+, time w slot?, idle, standby+, dual w mode?, plural w mode?, multi+ w system )

**C. DOCUMENTS CONSIDERED TO BE RELEVANT**

| Category* | Citation of document, with indication, where appropriate, of the relevant passages | Relevant to claim No. |
|---|---|---|
| Y | CN1578490A （BEIJING SAMSUNG COMM TECHNOLOG）, <br> 09 February 2005 （09.02.2005）,Page 1,line 11-page 2,line 29, fig.4 | 1-3,6-8,11-13,16-19 |
| Y | CN1499860A （LG ELECTRONICS INC）, 26 May 2004 （26.05.2004） <br> Page 1,line 10-18 | 1-3,6-8,11-13,16-19 |
| A | CN1412962A （SIEMENS MOBILE COMM SPA）, 23 April 2003 （23.04.2003） <br> Abstract, page 1,line 12-page 2,line 29, page 4,line 23-page 8,line 18 | 1-21 |
| A | CN1522089A （CHONGQING CHONGYOU INFORMATION）, <br> 18 August 2004 （18.08.2004）, The whole document | 1-21 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search <br> 08 October 2007 （08.10.2007） | Date of mailing of the international search report <br> **01 Nov. 2007 (01.11.2007)** |
|---|---|
| Name and mailing address of the ISA/CN <br> The State Intellectual Property Office, the P.R.China <br> 6 Xitucheng Rd., Jimen Bridge, Haidian District, Beijing, China <br> 100088 <br> Facsimile No. 86-10-62019451 | Authorized officer <br> ZHAO Hongyan <br> Telephone No. (86-10)62084582 |

Form PCT/ISA/210 (second sheet) (April 2007)

## INTERNATIONAL SEARCH REPORT
Information on patent family members

International application No.

PCT/CN2007/002110

| Patent Documents referred in the Report | Publication Date | Patent Family | Publication Date |
|---|---|---|---|
| CN1578490A | 09/02/2005 | NONE | |
| CN1499860A | 26/05/2004 | EP1416650A1 | 06/05/2004 |
| | | KR20040039561A | 12/05/2004 |
| | | US2004091072A1 | 13/05/2004 |
| | | JP2004159323A | 03/06/2004 |
| CN1412962A | 23/04/2003 | DE60107956T T2 | 08/12/2005 |
| | | ES2234798T T3 | 01/07/2005 |
| | | EP1303152A1 | 16/04/2003 |
| | | DE60107956D D1 | 27/01/2005 |
| | | AT285659T T | 15/01/2005 |
| CN1522089A | 18/08/2004 | NONE | |

Form PCT/ISA/210 (patent family annex) (April 2007)